Europäisches Patentamt

(19) European Patent Office

Office européen des brevets

(11) Publication number : **0 506 626 A1**

(12) # EUROPEAN PATENT APPLICATION

(21) Application number : 92830130.8

(22) Date of filing : 19.03.92

(51) Int. Cl.⁵ : **B60R 16/02, E05F 15/00**

(30) Priority : 25.03.91 IT MI910795

(43) Date of publication of application :
30.09.92 Bulletin 92/40

(84) Designated Contracting States :
DE ES FR GB PT

(71) Applicant : **Codrino, Giuseppe**
**Via Stazione, 2**
**I-15028 Quattordio (Alessandria) (IT)**

(72) Inventor : **Codrino, Giuseppe**
**Via Stazione, 2**
**I-15028 Quattordio (Alessandria) (IT)**

(74) Representative : **Cicogna, Franco**
**Ufficio Internazionale Brevetti Dott.Prof.**
**Franco Cicogna Via Visconti di Modrone, 14/A**
**I-20122 Milano (IT)**

(54) **Device for controlling a power window regulator assembly in motor vehicles.**

(57)   A device for controlling a power window regulator assembly in motor vehicles essentially comprises a microprocessor electronic circuit (1) controlled by control signals supplied by push-buttons (5,6,16) in order to allow the window glass to be either automatically or manually opened and closed, the manual or automatic actuation type being discriminated based on the duration of the actuation of the push-buttons, the electronic circuit (1) being moreover specifically designed for detecting possible obstacles against a proper sliding of the window glass as well as including limit switches (16) for switching off the driving electric current to the power window operating electric motor (11).

EP 0 506 626 A1

BACKGROUND OF THE INVENTION

The present invention specifically relates to a device for controlling a power window regulator assembly in motor vehicles, which device is controlled by an electronic circuit designed for allowing the window glass to be opened and closed either automatically or manually.

As is known, the so-called power windows are at present used on a broad range of motor vehicles.
Also known is that these power windows usually comprise an electric driving assembly but do not generally include easily accessible and operated manual means, for example a lever, in order to manually operate, as required, the window.

A main advantage of a power window is that it can be automatically operated without diverting the attention of the operator, by means of easily accessible and operated controls in order to open, either fully or partially, the window and in order to automatically close it.

In this connection it should be pointed out that a drawback of prior driving assemblies for automatically operating power windows is that, in order to fully open or close the window glass, the driver is compelled to hold actuated the control push-button for a comparatively long time.

SUMMARY OF THE INVENTION

Accordingly, the aim of the present invention is to overcome the above mentioned drawback by providing a device for controlling a power window regulator assembly in motor vehicles which is specifically designed for either fully automatically or manually operating the window glass, without compelling the operator to perform two different actuating operations on the power window control push-button.

Within the scope of the above mentioned aim, a further object of the present invention is to provide such a device for controlling a power window regulator assembly in motor vehicle which also comprises circuit means for detecting possible obstacles against a proper sliding of the window glass, as well as circuit means for detecting the end of stroke positions of the window glass.

Another object of the present invention is to provide such a device for controlling a power window regulator assembly in motor vehicle which is very simple construction wise, that is includes a very reduced number of component elements of highly reliable operation, which can be assembled in a very simple and quick manner, and which, moreover, is very competitive from a mere economic standpoint.

Yet another object is to provide a device for controlling a power window regulator assembly in motor vehicles in which the circuit means included therein are controlled with a set delay time in order not to accidentally actuate the electric motor controlling the window glass for example because of rebounds of electrical contacts or short duration noise.

According to one aspect of the present invention, the above mentioned aim and objects, as weel as yet other objects, which will become more apparent hereinafter, are achieved by a device for controlling a power window regulator assembly in motor vehicles, characterized in that said device essentially comprises a microprocessor controlled electronic circuit which is controlled by control signals supplied by push-buttons in order to allow a window glass to be opened and closed either automatically or manually, depending on an actuation duration of said push-buttons, said electronic circuit including moreover detecting means for detecting obstacles to a proper sliding of said window glass, as well as limit switch means in order to switch off the electric current to an electric motor driving said window glass as said window glass is arrived at a limit end of stroke position.

BRIEF DESCRIPTION OF THE DRAWINGS

Further characteristics and advantages of the device for controlling a power window regulator assembly in motor vehicles according to the present invention will become more apparent hereinafter from the following detailed disclosure of a preferred, though not exclusive, embodiment thereof, which is illustrated, by way of an indicative but not limitative example, in the figures of the accompanying drawings, where:

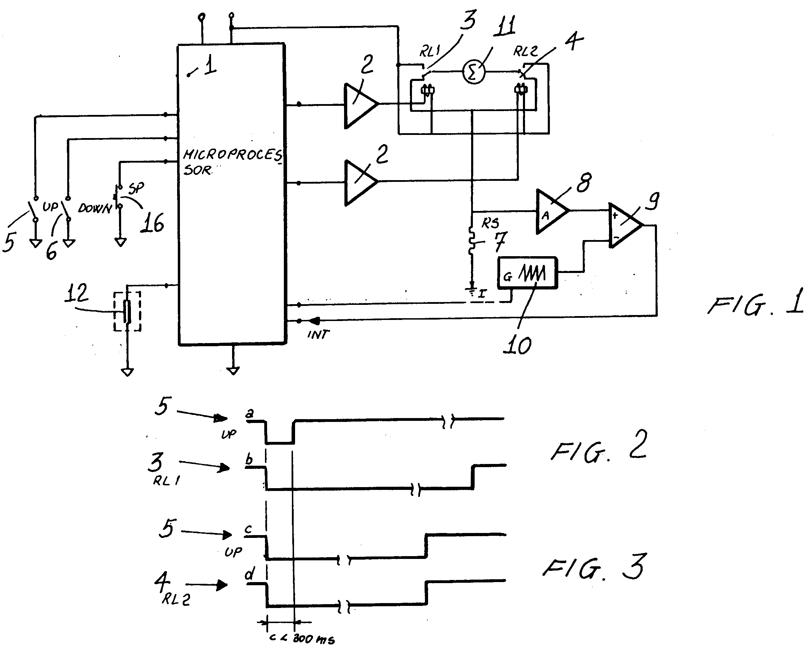

Figure 1 illustrates a functional diagram of the control device according to the present invention;

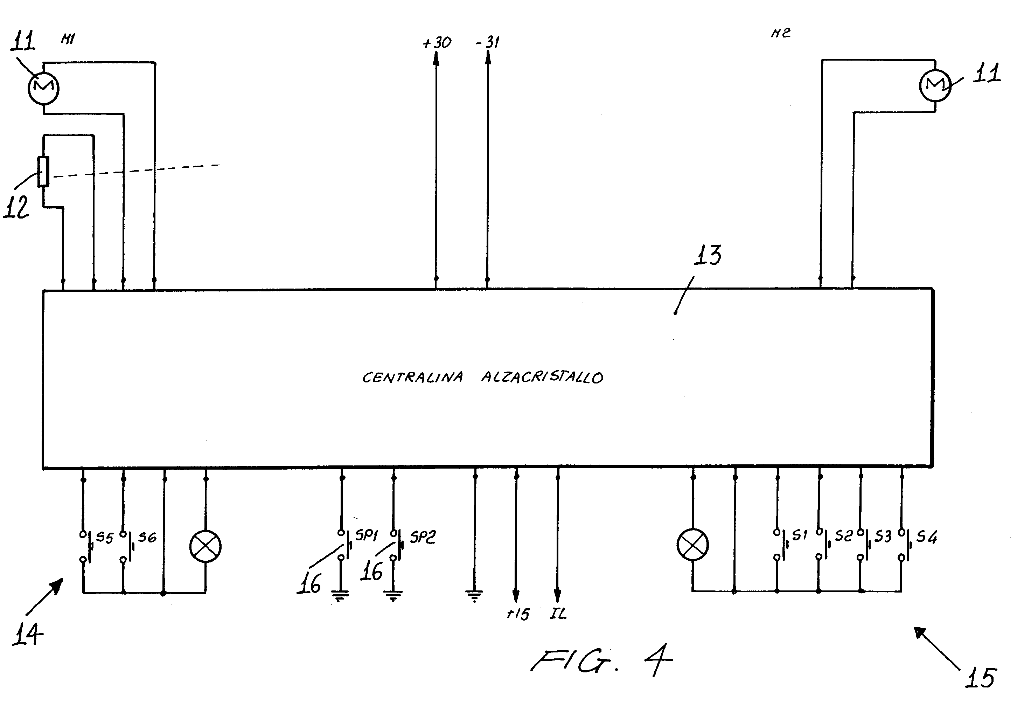

Figures 2 and 3 show wave diagrams related to the actuation of a push-button and a corresponding driving relay, respectively in an automatic operation condition and in a manual operation condition;

Figure 4 schematically illustrates the outer connections of a control central unit included in the control device according to the present invention; and

Figure 5 illustrates a modified diagram providing for the use of a microprocessor.

DESCRIPTION OF THE PREFERRED EMBODIMENT

With reference to the Figures of the accompanying drawings, the device for controlling a power window regulator assembly in motor vehicles, according to the present invention, essentially comprises a control circuit 1 made of microprocessor controlled electronic components, or customized circuits, in turn made by any suitable technique, and specifically designed for controlling driver circuits 2 in turn adapted to control corresponding driving relays 3 and 4.

This control circuit or module is specifically designed both for holding said relays energized up to a full opening or closing of the window glass, by properly operating the related push-buttons 5 and 6 for a first smaller time less than a preset time, and holding said relays energized for the actuation time of said push-buttons, if this actuation time is larger than the mentioned preset time.

On the ground line there is included a low resistance value resistor 7, which operates as a shunt resistor providing a voltage drop thereon which is suitably amplified by an operational circuit 8.

This voltage drop is compared, through a dedicated comparing circuit 9, with a ramp voltage generated by an electronic ramp generating circuit 10.

In operation, as the mentioned ramp voltage is equal (within a given tolerance range) to the input voltage, the output of said comparator circuit 9 will be brought to a low logic level, so as to generate the so-called interrupt signal for the control circuit.

In this connection it should be mentioned that the control circuit is herein specifically designed with a reset capability, that is with the capability of clearing the voltage through a reset input of the ramp circuit.

Moreover, by means of the above mentioned comparing operation, the microprocessor of the control module can calculate the value of the current supplied to the motor 11, so as to provide a current control as necessary for a proper operation of the circuit itself.

As it should be apparent to one skilled in the art, the circuits 8, 9 and 10 substantially form a single-ramp analogic/digital converter.

Thus, as a valid command is detected and the electric motor is operated, the control circuit will take as a first reference the electric motor starting current, and will store the value of this current.

Then, after about 300 ms (a regimen condition), it is sampled and stored another current value which will be used as a relative reference for switching off the electric motor at the limit position of the window glass.

If required, this reference value will be corrected by a some constant (hyteresis) in order to prevent discontinuous friction forces exerted in the glass guides from undesirably stopping the glass.

The above mentioned hysteresis value, in particular, can be selected by means of bridge connections available on the circuit, so as to provide a device which can be fitted to any contingent requirement.

During the overall movement of the glass, the istantaneous value of the electric current of the motor will be continuously sampled (for example a sample for each 2 ms time slot).

If the value of this current is greater than or equal to the set reference value and if this value of the drained current is held for a given time (which can be also selected by means of bridge connections), then the driving of the glass will be switched off and the end of stroke or limit condition will be stored.

Depending on the selected logic, by the same bridge connection arrangement different values will be obtained for the latency or the like (debouncing) time, for the limit position or for possible sliding obstacles.

In each case, the operation current of the electric motor is continuously compared with the above mentioned starting or maximum value, and the driving assembly will be switched off if this current exceeds such a maximum value.

Thus, excessively low voltage values (equal to or less than 9 V) are prevented from causing, together with a high hysteresis value, a failure in the switching off of the electric motor at the limit displacement position.

It is moreover be pointed out that the limit condition is reset automatically as the related driving push-button is released.

Moreover, as a telescopic impact condition of the motor vehicle is sensed,which is supplied by a suitable sensor 12, the power supply to the electric motor is immediately switched off.

In order to improve the safety and reliability of operation of the device, the following functions have moreover been implemented:

– the opening control 5 is prioritary with respect to the closure command or control 6, thereby, in a case of a conflict between the two commands, exclusively the opening command will be actuated; in particular, if the closing push-button is pressed and also the opening push-button is pressed, the window glass will revert its movement and the manual control will be actuated.

– If one of the two push-buttons, or both the push-buttons, are already pressed at the reset time (that is as the starting key is inserted or the driver side door is opened), then none command will be actuated up to a release of the two push-buttons; this, as it should be apparent, will prevent the window glass from being undesirably actuated in a case of a short circuit of either one of the pushbuttons or both the push-buttons.

– As the opening actuating or command push-button is pressed for a time greater than 30 sec., then this will be considered as a short-circuit, thereby the command will be cleared, in order to allow the glass to be anyhow closed.

– A current control which is substantially independent from the motor type and the mechanisms of the door; in fact, there is implemented an algorithm which allows the current reference set at 300 ms to be automatically updated. This control can be performed by comparing, for each 500 ms time slot, the value of the instantaneous current supplied to the electric motor operating the glass, against the preceding value thereof; if the current value is greater than the preceding value (obviously within the hysteresis range or field), then it will be considered as a new current reference. Thus, the window glass is prevented from undesirably stopping in the presence of high discontinuous friction forces along its guides. In each case, the motor will be switched off as the instantaneous value of the current drained thereby is equal to or greater than, for a significative time period (selectable debouncing), the maximum value. Obviously, this algorithm will be not actuated if, as a reference, one directly selects the maximum or starting current value.

– The central control unit is also specifically designed for switching off the relays, within few millisecond tens as the wiring conductors of the electric motor are interrupted, before any actuation of said motor. If the interruption of the wiring occurs during an actuation, then the relays will be switched off after 500 ms.

– The manual command, in an open door condition, will be devoid of any current control, with the exception of a wiring interruption condition. The object is to allow the glass to be closed even in the presence of particularly friction forces. In an inserted key condition, the current control can be either selected or not (by means of bridge connections on CSR); in the case in which such a control is selected, then, as a current reference for the glass end of stroke position, will be taken the maximum or starting value of the current of the motor.

– if the current control, for any reasons, is not energized (for example because of a lack of the voltage ramp on the capacitor),then the actuation of the window glass will be interrupted for each 500 ms time slot, while signalling this failure to the user, but allowing the controls to be anyhow actuated, even if in a degraded way.

– A "Sw trap" has been moreover implemented in order to prevent the programm from performing undesired loops, with the generation, in such a case, of a microprocessor Sw reset; in this connection, a suitable "watchdog" circuit has been provided for monitoring the proper operation of the microprocessor.

– The possibility of using an "anti-crushing" sensor or circuit which, when exclusively actuated by a microprocessor automatic command, will allow the stroke or displacement of the window glass to be reversed each 500 ms, as an obstacle is present between the glass and the edge of the motor vehicle door.

– A 10 second time out is moreover provided, beyond which any existing command is cleared; this approach constitutes a great safety means, in the case in which the motor is not switched off at its limit position, because of a failure.

As it should be apparent, the above mentioned control push-button pair 5, 6 can also be replaced by a single toggle push-button having a rest position.

Moreover, with the starting key in its "off" position, and with the driver side door open, the power window central control unit 13 is power supplied and exclusively the manual controls are enabled, whereas, with the starting key in its off condition and with the driver side door closed, the central control unit is not power supplied and, accordingly, the commands or controls are disabled.

Vive-versa, with the starting key in its on condition, the central control unit is power supplied, and both the automatic and the manual controls are enabled.

In this connection, it is moreover be pointed out that the device according to the present invention can use, as power apparatus, for power supplying the electric motors operating the window glasses, both electromechanic relays and solid state devices.

Figure 4, in particular, shows a push-button assembly as provided on the front door of the motor vehicle, at the passenger side 14, and a double push-button assembly 15 provided at the driver side, the reference number 16 indicating full door closure condition contacts.

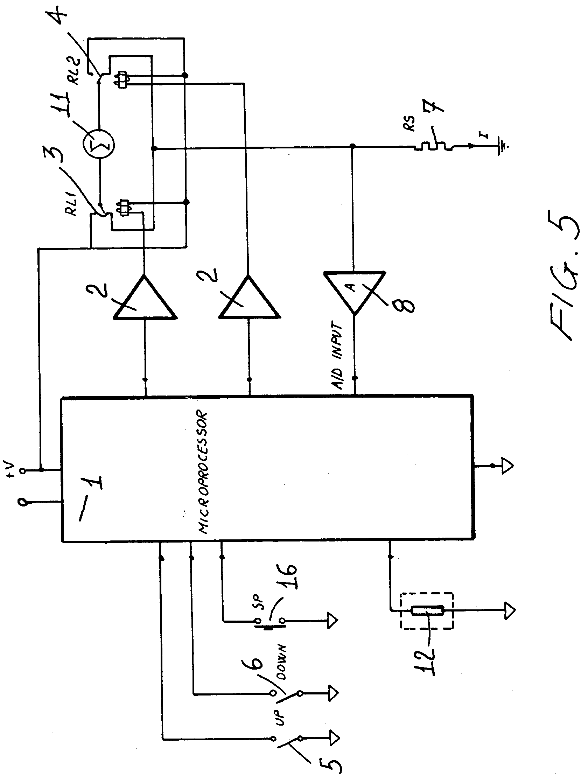

Figure 5 illustrates a further modified application diagram which uses a microprocessor comprising in its circuitry A/D converters and specifically designed for directly receiving the output signal of the amplifying stage 3.

From the above disclosure and the figures of the accompanying drawings it should be apparent that the device of the invention fully achieves the intended aim and objects.

While the invention has been disclosed and illustrated with reference to a preferred embodiment thereof it should be apparent that the disclosed embdodiment is susceptible to several modifications and variations all of which will come within the spirit and scope of the appended Claims.

Claims

1. A device for controlling a power window regulator assembly in motor vehicles, characterized in that, said device essentially comprises a microprocessor controlled electronic circuit which is controlled by control signals supplied by push-buttons in order to allow a window glass to be opened and closed either automatically or manually, depending on an actuation duration of said push-buttons, said electronic circuit including moreover detecting means for detecting obstacles to a proper sliding of said window glass, as well as limit switch means in order to switch off the electric current to an electric motor driving said window glass as said window glass is arrived at a limit end of

stroke position.

for at least a preset delay time.

2. A device, according to Claim 1, wherein said control circuit controls a plurality of driver circuit elements in turn controlling a corresponding plurality of relays, said control circuit holding said relays energized up to a full opening or closing of the window glas, with an actuation of the push-buttons for a time less than a preset time, and holding said relays energized for a time corresponding to the actuation time for the push-buttons if said time is greater than the preset time.

3. A device, according to Claim 1, wherein in that said circuit comprises a ground line including a low resistance value resistor providing a voltage drop thereon to be amplified by an operational circuit and compared by comparing circuit means with a ramp voltage generated by a ramp voltage generator means.

4. A device, according to Claim 1, wherein said control circuit comprises means for clearing the voltage through a reset input of the ramp circuit, said microprocessor calculating by means of a comparing operation the value of the current supplied to the window glass driving motor so as to control said current to a set current value.

5. A device according to Claim 1, wherein said control circuit further comprises current control means independently controlling the current to a plurality of window glass driving electric motors based on an algorithm allowing a reference current supplied to said window glass motors to be automatically updated.

6. A device according to Claim 1, wherein saod electronic circuit further comprises an anti-crushing sensor which, as automatically driven by said microprocessor, allow a said window glass motor to be reversed in order to revert the movement direction of said window glass, as an obstacle is present between an edge portion of said window glass and an edge portion of a door of said motor vehicle.

7. A device according to Claim 1, wherein said electronic circuit further comprises power devices for supplying the window glass driving motors, said power devices including power relays and power controlling solid state elements.

8. A device according to Claim 1, wherein said electronic circuit further comprises a plurality of bridge connectors for setting control parameters, and clearing all of the actuating or disenergizing commands which are not held in an active condition

FIG. 1

FIG. 2

FIG. 3

FIG. 4

FIG. 5

## European Patent Office

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X<br>Y | DE-A-3 532 078 (FUJITSU LTD.)<br>* page 5, line 1 - line 5 *<br>* page 5, line 16 - page 6, line 18 *<br>* page 7, line 2 - line 6 *<br>* page 9, line 8 - page 12, line 5 *<br>* page 13, line 2 - page 14, line 9 *<br>* page 17, line 24 - page 18, line 25 *<br>* page 20, line 14 - page 21, line 19; claims 1-5; figures 1-6,9A-12B * | 1,3-8<br>2 | B60R16/02<br>E05F15/00 |
| Y | DE-A-3 832 941 (ALPS ELECTRIC CO.)<br>* column 2, line 3 - line 50 *<br>* column 4, line 19 - column 8, line 63 *<br>* column 9, line 45 - column 10, line 63; claims 1-3; figures 1-7 * | 2 | |
| Y | DE-A-3 332 813 (KÜSTER & CO.)<br>* the whole document * | 1-8 | |
| Y | DE-A-3 734 449 (ROLTRA S.P.A)<br>* column 2, line 19 - line 33 *<br>* column 3, line 11 - line 32 *<br>* column 3, line 56 - column 4, line 15 *<br>* column 4, line 57 - column 5, line 25 *<br>* column 5, line 54 - line 57 *<br>* column 6, line 3 - line 66 *<br>* column 7, line 35 - column 8, line 39 *<br>* claims 1-12; figures 1,2 * | 1-8 | **TECHNICAL FIELDS SEARCHED (Int. Cl.5 )**<br><br>B60R<br>E05F<br>B60J |
| A | EP-A-0 300 550 (BONETTO)<br>* the whole document * | 1,2,6,7 | |
| A | OE-A-3 730 281 (B.M.W)<br>* the whole document * | 1,2 | |
| A | PATENT ABSTRACTS OF JAPAN<br>vol. 8, no. 161 (E-257)(1598) 26 July 1984<br>& JP-A-59 059 087 ( FUJITSU ) 4 April 1984<br>* abstract * | 1-8 | |

The present search report has been drawn up for all claims

| Place of search | Date of completion of the search | Examiner |
|---|---|---|
| THE HAGUE | 09 JUNE 1992 | GEYER J.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

European Patent
Office

## EUROPEAN SEARCH REPORT

Application Number

EP 92 83 0130
Page 2

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl.5 ) |
| A | PATENT ABSTRACTS OF JAPAN<br>vol. 9, no. 219 (M-410)(1942) 6 September 1985<br>& JP-A-60 077 687 ( NIPPON DENSO K.K ) 2 May 1985<br>* abstract * | 1-8 | |
| | ----- | | |
| | | | **TECHNICAL FIELDS SEARCHED (Int. Cl.5 )** |

The present search report has been drawn up for all claims

| Place of search | Date of completion of the search | Examiner |
|---|---|---|
| THE HAGUE | 09 JUNE 1992 | GEYER J.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)